**Europäisches Patentamt**

**European Patent Office**

**Office européen des brevets**

(19)

(11) Veröffentlichungsnummer: **0 142 656**
**B1**

(12) # EUROPÄISCHE PATENTSCHRIFT

(45) Veröffentlichungstag der Patentschrift:
04.02.87

(51) Int. Cl.⁴: **B 65 D 63/14**

(21) Anmeldenummer: **84110841.8**

(22) Anmeldetag: **12.09.84**

(54) Vorrichtung zum Binden eines langgestreckten Gegenstandes, beispielsweise eines Kabelbaums.

(30) Priorität: **21.09.83 DE 8327158 U**

(43) Veröffentlichungstag der Anmeldung:
**29.05.85 Patentblatt 85/22**

(45) Bekanntmachung des Hinweises auf die Patenterteilung:
**04.02.87 Patentblatt 87/6**

(84) Benannte Vertragsstaaten:
**DE FR GB IT NL SE**

(56) Entgegenhaltungen:
**EP-A-0 045 164**
**EP-A-0 075 501**
**DE-A-2 054 520**
**DE-B-1 279 801**
**FR-A-2 486 172**
**US-A-2 988 391**
**US-A-3 107 935**

(73) Patentinhaber: **Paul Hellermann GmbH,
Siemensstrasse 5, D-2080 Pinneberg (DE)**

(72) Erfinder: **Six, Jörg, Dipl.- Ing., Eiderstrasse 24,
D-2000 Norderstedt (DE)**

(74) Vertreter: **Glawe, Delfs, Moll & Partner
Patentanwälte, Postfach 26 01 62 Liebherrstrasse
20, D-8000 München 26 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung zum Binden eines langgestreckten Gegenstandes beispielsweise eines Kabelbündels, mit einem um den Gegenstand zu spannenden Band und einem die Bandenden verbindenden Schloß, das eine Durchgangsöffnung für mindestens ein Bandende und eine quer dazu verlaufende Bohrung aufweist, die einen durch das in der Durchgangsöffnung befindliche Band zu treibenden Stift enthält, wobei der Stift und die Bohrung mit dem Stift in seiner Endstellung sichernden, zusammenwirkenden Vor- und Rücksprüngen versehen sind.

Bei einer bekannten Vorrichtung dieser Art (US-A 3.353.227) wird das Band beim Durchtreiben des Stifts töpfchenartig um das Stiftende herum geformt. Der Stift wird in der Verschlußstellung dadurch gesichert, daß er an seinem vorangehenden Ende zusammen mit dem ihn umgebenden, tiefgezogenen Band innerhalb eines erweiterten Teils der Bohrung nietkopfartig breitgequetscht wird und damit einen Durchmesser annimmt, der größer ist als der Durchmesser in dem dahinter liegenden Teil der Bohrung. Da das Material des Schlosses, des Bandes und des Stifts gewöhnlich etwas nachgiebig ist, beispielsweise bei Herstellung aus Polyamid, wird die Verdickung in der Praxis kräftig ausgeführt, da sonst die Gefahr besteht, daß der Stift bei hoher Bandspannung unter entsprechender Weitung des Schloßkörpers zurückgleitet. Da aber beim Schließen des Bandverschlusses Unregelmäßigkeiten vorkommen können, die dazu führen können, daß die Stiftverdickung weniger stark ausfällt, als dies eigentlich erwünscht ist, kann die Gefahr nicht ausgeschlossen werden, daß mitunter ein Verschluß wegen unzureichender Stiftverformung eine unzureichende Festigkeit aufweist.

Zur Vermeidung dieses Nachteils ist es aber auch bekannt (FR-A 24 86 172, Figur 1 und Figur 3), den Stift und die Bohrung mit zusammenwirkendem Gewinde zu versehen, was aber den Nachteil hat, daß der Stift umständlich in das Schloß eingeschraubt werden muß und dadurch die Gefahr fördert, daß der Stift versehentlich nicht weit genug in das Schloß hineingeschraubt wird.

Ferner ist es bekannt (FR-A 24 86 172, Figur 7; US-A 29 88 391), das Bandschloß mit einer Vertiefung zu versehen, in welche die zu sichernden Bandenden mittels eines Stiftes zu ihrer Befestigung eingepreßt werden, wobei der Stift und die Vertiefung zusammenwirkende Restvorsprünge und -vertiefungen aufweisen, die durch das Einschieben des Stiftes in die Vertiefung in Eingriff kommen. Dabei wird der Stift durch die vom Band auf ihm ausgeübte Kraft ausschließlich in seiner Löserichtung beansprucht, so daß die Rastverbindung die volle vom Band auf den Stift übertragene Kraft aufzunehmen hat. Wie man weiß, sind aber Rastverbindungen von Kunststoffteilen nur zu begrenzter Kraftaufnahme fähig, so daß die bekannte Vorrichtung für hohe Beanspruchungen ungeeignet ist.

Der Erfindung liegt die Aufgabe zugrunde, eine Vorrichtung der eingangs genannten Art zu schaffen, die eine höhere Verschlußsicherheit aufweist, insbesondere auch unabhängig von der Sorgfalt, mit der der Verschluß vollzogen wurde.

Die erfindungsgemäße Lösung besteht darin, daß der Stift und die Bohrung auf ihrer dem zu bindenden Gegenstand zugewendeten Seite entgegen der Löserichtung des Stifts hintereinander greifende Rastkanten aufweisen, die so angeordnet sind, daß sie bei zunehmender Bandspannung sicherer in Eingriff gehalten werden.

Die Erfindung beruht auf den Gedanken, daß bei dieser Anordnung der Stift durch die Bandkräfte auf der dem zu bindenden Gegenstand zugewendeten Seite der Bohrung gepreßt wird und daß eine auf dieser Seite vorgesehene Rastverbindung daher nicht nur durch die elastischen Kräfte des verwendeten Materials sondern vielmehr durch die Bandkräfte zusammengehalten wird. Die Sicherungskraft, mit der die Rastverbindung den Stift in der Bohrung festhält, ist dabei um so größer, je größer die Bandbelastung ist.

Im Prinzip genügt es, die zusammenwirkenden Rastkanten lediglich auf dieser dem Gegenstand zugewendeten Seite des Stifts vorzusehen. Zweckmäßiger ist es jedoch, die stiftseitige Kante (oder Kanten) umlaufend anzuordnen, damit man unabhängig von einer ggf. mühevollen und fehlerträchtigen Orientierung des Stifts ist.

Der gegenseitige Eingriff der Rastkanten ist um so sicherer, je weniger der Schloßkörper im Bereich der Rastkanten unter der Bandspannung verformt ist. Eine solche Verformung kann vornehmlich daher rühren, daß der Schloßkörper durch die von ihm aus in entgegengesetzter Richtung auseinanderstrebenden Bandenden einer ihn aufweitenden Spannung ausgesetzt ist. Dem wird erfindungsgemäß dadurch entgegengewirkt, daß das Schloß auf der Seite des zu bindenden Gegenstands verstärkt ausgeführt ist, und zwar vorzugsweise durch seitlich der Durchgangsöffnung gegenstandsseitig am Schloßkörper vorgesehene Rippen. Wenn ein Bandende mit dem Schloß einstückig verbunden ist, ist es zweckmäßig, diese Verstärkungsrippen in ihrer Längsrichtung in das Band übergehen zu lassen, damit die Zugspannungen des Bandes zumindest zu einem großen Teil in diese Rippen eingeleitet und von diesem auf denjenigen Teil des Schloßkörpers übertragen werden, der, vom Band aus gesehen, jenseits der Durchgangsöffnung liegt.

Wenn der Schloßkörper auf seiner dem Gegenstand zugewendeten Seite eine Anlagefläche aufweist, die rechtwinklig zu der Durchgangsöffnung verläuft, wird das in dem Schloß zu sichernde Bandende beim Einlauf in die Durchgangsöffnung nahezu um 90° umgelenkt. Die an seiner Biegeaußenseite auftretenden Zugspannungen wirken sich wegen der geringen Distanzen auch in demjenigen Bereich aus, in welchem es durch den Stift verformt ist, indem sie diejenigen Kräfte verstärken können, die den Stift in Löserichtung drängen. Erfindungsgemäß ist es deshalb zweckmäßig, wenn der Umlenkungswinkel des Bandes bei dessen Einlauf in die Durchgangsöffnungen dadurch herabgesetzt wird, daß die Anlagefläche des Schloßkörpers, die an dem zu bindenden Gegenstand unmittelbar oder über Vermittlung des Bandes anliegt, zu der Richtung der Durchgangsöffnung einen Winkel von mehr als 90° auf der Seite des in die Durchgangsöffnung einlaufenden Bandes einschließt. Die zuvor erwähnten Verstärkungsrippen werden zweckmäßigerweise zur Bildung dieser Anlagefläche verwendet.

Die Erfindung wird im folgenden näher unter Bezugnahme auf die Zeichnung erläutert, die zwei vorteilhafte Ausführungsbeispiele veranschaulicht. Es zeigen:

Fig. 1 einen Längsschnitt durch eine erste Schloßausführung vor deren Verwendung,

Fig. 2 einen Längsschnitt durch dieselbe Schloßausführung im geschlossenen Zustand,

Fig. 3 einen Längsschnitt durch eine zweite Ausführungsform vor deren Verwendung,

Fig. 4 eine Ansicht dieser Ausführungsform von der in Fig. 3 linken Seite her,

Fig. 5 eine Ansicht dieser Ausführungsform von der in Fig. 3 unteren Seite her und

Fig. 6 einen der Fig. 3 entsprechenden Längsschnitt im geschlossenen Zustand.

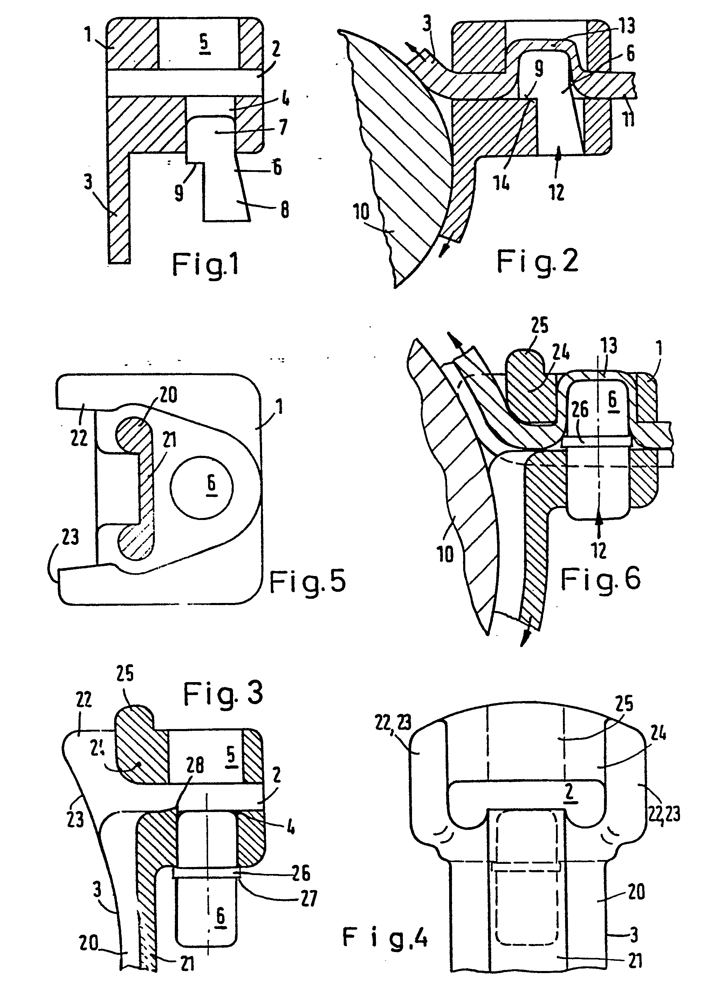

Der in seiner Außenform quadrisch vorzustellende Schloßkörper 1 der Ausführungsform gemäß Fig. 1 und 2 besitzt eine flache Durchgangsöffnung 2 konstanten Querschnitts, der demjenigen des Bandes 3 gleicht, das einstückig mit dem Schloßkörper 1 beispielsweise aus Polyamid besteht. Quer zur Durchgangsöffnung 2 enthält der Schloßkörper 1 eine Bohrung, deren unterer Abschnitt 4 einen etwas engeren Querschnitt als ihr oberer Abschnitt 5 aufweist. In dem zur Verwendung vorbereiteten Schloß ist der Stift 6 mit seinem Kopf 7 in den Bohrungsabschnitt 4 etwa passend eingeschoben, so daß er sich darin aufgrund seiner Reibung festhält. Der Fuß 8 des Stifts 6 ist gegenüber dem Kopf 7 bei 9 stufig abgesetzt. Der Stift ist in der Richtung quer zur Zeichenebene schmaler als das Band.

Zur Verwendung wird das Band 3 um den zu bindenden Gegenstand 10 geschlungen; sein Ende 11 wird durch die Durchgangsöffnung 2 geführt; es wird gespannt; anschließend wird der Stift 6 durch eine in Pfeilrichtung 12 wirkende Kraft in den Schloßkorper eingestoßen. Dabei wird das Band 3 im Bereich 13 töpfchenformig um den Kopf 7 des Stifts 6 herum tief gezogen, so daß es den Kopf 7 des Stifts 6 auf fünf Seiten einschließt. Der Stift wird so weit in den Schloßkörper eingedrückt, bis seine Stufe 9 hinter die Stufe 14 des Schloßkörpers faßt.

Aufgrund der durch Pfeile angedeuteten Spannung im Band 3 wird der Stift 6 in Fig. 2 nach links gezogen, so daß die Stufen 9 und 14 voll miteinander in Eingriff kommen. Je größer die Bandspannung ist, um so sicherer werden die Stufen 9 und 14 in Eingriff gehalten. Die Sicherungskräfte sind daher immer größer als diejenigen Kräfte des Bandes 3, die in Löserichtung (entgegen der Richtung des Pfeiles 12) auf den Stift einwirken.

In den Fig. 3 bis 6, die das zweite Ausführungsbeispiel darstellen, sind entsprechende Teile mit gleichen Bezugsziffern wie in Fig. 1 und 2 versehen. Der Schloßkörper 1 hat eine etwa quadrische Außengestalt. Einstückig ist mit ihm an seiner Unterseite an deren dem zu bindenden Gegenstand 10 zugewendeten Rand des Band 3 einstückig verbunden, das sich aus zwei wulstförmigen Rändern 20 und einem dünneren Mittelteil 21 zusammensetzt. Die Wulstränder 20 ragen im Querschnitt auf der dem zu bindenden Gegenstand zugewendeten Seite vor. Sie gehen am Schloßkörper seitlich der Durchgangsöffnung 2 in Verstärkungsrippen 22 über, die die Anlageflächen 23 bilden, mit denen der Schloßkörper an der Oberfläche des zu bindenden Gegenstandes 10 anliegt. Die Richtung dieser Anlageflächen 23 schließt mit der Richtung der Durchgangsöffnung 2 einen Winkel ein, der auf der Seite des in die Durchgangsöffnung einzuführenden Bandes größer als 90° ist, so daß dies, wie in Fig. 6 erkennbar, eine Krümmung von weniger als 90° beim Einlauf in die Durchgangsöffnung erleidet. Außerdem ist erkennbar, daß die von dem Band 3 von dessen mit dem Schloß einstückig verbundenen Ende auf den Schloßkörper ausgeübten Zugkräfte dank dieser Verstärkungsrippen nicht nur in demjenigen Teil des Schloßkörpers eingeleitet werden, der unterhalb der Durchgangsöffnung 2 liegt, sondern auch in den darüber befindlichen Teil 24, der durch einen Wulst 25 zusätzlich biegefest verstärkt sein kann, um einer Verformung unter der Spannung des in die Durchgangsöffnung 2 einlaufenden Bandendes besser widerstehen zu können. Die Bohrung ist in ihrem unteren Abschnitt 4 und oberen Abschnitt 5 konzentrisch zylindrisch ausgeführt, wobei der obere Abschnitt 5 zur Aufnahme des tiefgezogenen Bereichs 13 des Bandes 3 einen größeren Durchmesser aufweist. Der Stift hat über seine ganze Länge konzentrisch zylindrische Gestalt, wobei sein Durchmesser dem des unteren Abschnitts 4 der Bohrung gleicht. In seinem mittleren Bereich weist er einen Ringvorsprung 26 auf, der zumindest auf seiner unteren Seite eine rechtwinklig zur sonstigen Stiftoberfläche verlaufende Rastkante oder Anschlagfläche 27 bildet. Zweckmäßigerweise ist er, wie dargestellt, auf seiner oberen und seiner unteren Seite gleich ausgebildet, damit der Stift beim Einsetzen in die Bohrung nicht in bestimmter Weise orientiert zu werden braucht. Der Ringvorsprung 26 ist so ausgeführt, daß er unter elastischer Verformung des Stifts und des Schloßkörpers in Pfeilrichtung 12 durch den unteren Abschnitt 4 der Bohrung getrieben werden kann, bis die Anschlagfläche 27 über der entgegengesetzten Anschlagfläche 28 des Schloßkörpers in der Durchgangsöffnung 2 liegt. Dieser Zustand ist in Fig. 6 erkennbar, Der Ringvorsprung 26 mit der Anschlagfläche 27 bildet im Zusammenwirken mit dem Bohrungsschnitt 4 und der sie begrenzenden Anschlagfläche 28 eine Rastverbindung, die einer Lösebewegung des Stifts entgegen der Pfeilrichtung 12 erheblichen Widerstand entgegensetzt, der nur durch Verformung des Stifts und/oder des Schlosses überwunden werden kann. Zur Vergrößerung des Verformungswiderstands der Anschlagfläche 28 ist diese entgegen der Löserichtung des Stifts 6 ein wenig spitzwinklig hochgezogen, wie man es in Fig. 3 sieht, so daß sie selbst dann, wenn sie sich in Löserichtung verformt haben sollte, immer noch eine rechtwinklige Stufe bildet, wie es in Fig. 2 dargestellt ist. Obwohl der Verformungswiderstand hoch ist, könnte er in Fällen sehr hoher Bandspannungen und entsprechend starker Schloßkörperverformung in manchen Fällen unzureichend sein, um den Stift 12 entgegen den auf ihn wirkenden Kräften in der Sicherungsstellung gem. Fig. 6 zu halten, wenn nicht der Effekt hinzukäme, daß das gespannte Band den Stift in Fig. 6 nach links zieht, wodurch auf der dem zu bindenden Gegenstand 10 zugewendeten Seite des Stifts 6 die Anschlagflächen 27 und 28 in sicherem Eingriff gehalten werden, so daß es nicht darauf ankommt, ob dieser Eingriff an anderen Stellen durch zu hohe Krafteinwirkung, die Nachgiebigkeit des Werkstoffes oder die Schloßkörperverformung in Frage gestellt ist. Die Verstärkungsrippen 22 und der Wulst 25 sowie allgemein die verformungsstabile Ausführung des Schloßkörpers auf seiner dem zu bindenden Gegenstand 10 zugewendeten Seite wirken dabei mit, die Eingriffsverhältnisse der Anschlagflächen 27, 28 auch unter Bedingungen starker Beanspruchung von Verformungen so weitgehend frei zu halten, daß dadurch der Eingriff der Anschlagflächen nicht gefährdet wird.

Der Richtungsvorsprung kann durch eine Mehrzahl von Vorsprüngen ersetzt sein, wobei hinsichtlich der Zahl und Anordnung dieser Vorsprünge lediglich gewährleistet sein muß, daß mindestens ein Vorsprung sich in demjenigen Umfangsbereich des Stifts 6 befinden muß, der in Fig. 6 nach links weist und in welchem der Stiftumfang durch den Zug des Bandes gegen den Bohrungsumfang gezogen wird.

Die an dem zu bindenden Gegenstand 10 anliegende Oberfläche 23 der Rippen 22 soll nach der Erfindung stetig in die Oberfläche der Wulstränder 20 des Bandes 3 übergehen, wie man es in Fig. 3 erkennt, um eine gleichmäßige Anlage an dem zu bindenden Gegenstand, und damit eine gleichmäßige Kraftübertragung zu gewährleisten. Dies kann beispielsweise dann erforderlich sein, wenn der zu bindende Gegenstand eine flexible Manschette ist, die über ihren ganzen Umfang dicht an einen Stutzen angepaßt werden soll. Auch wird dadurch verhindert, daß das Band 3 in dem Bereich, in dem es einstückig in den Schloßkörper 1 übergeht, stark gebogen wird, was sowohl die Festigkeit des Bandes als auch die mechanische Eigenschaften des Schloßkörpers beeinträchtigen könnte. Zur besseren Anlage der Fläche 23 einschließlich der sich anschließenden Teile des Randwulsts 20 kann diese entsprechend der mittleren Krümmung der zu bindenden Gegenstände konkav gekrümmt sein, wie man dies in Fig. 3 erkennt.

Der Stift 6 kann, damit der Ringvorsprung beim Einpressen des Stifts in den Schloßkörper nicht beschädigt wird, aus widerstandsfähigerem Material bestehen. Wenn der Schloßkörper aus Polyamid besteht, kann der Stift beispielsweise aus glasfaserverstärktem Polyamid bestehen. Der Ringvorsprung an seiner vorlaufenden Seite und/oder die Eingangsseite der Bohrung können auch mit einer Abschrägung oder Fase versehen sein, um die elastische Verformung beim Einpressen des Stifts zu erleichtern.

**Patentansprüche**

1. Vorrichtung zum Binden eines langgestreckten Gegenstandes (10), beispielsweise eines Kabelbündels mit einem um den Gegenstand zu spannenden Band (3) und einem die Bandenden verbindenden Schloß (1), das eine Durchgangsöffnung (2) für mindestens ein Bandende (11) und eine quer dazu verlaufende Bohrung (4, 5) aufweist, die einen durch das in der Durchgangsöffnung (2) befindliche Band (3, 11) zu treibenden Stift (6) enthält, wobei der Stift (6) und die Bohrung (4, 5) mit zusammenwirkenden Vor- und Rücksprüngen zur Sicherung des Stifts in dessen Endstellung versehen sind, dadurch gekennzeichnet, daß der Stift (6) und die Bohrung (4, 5) auf ihrer dem zu bindenden Gegenstand (10) zugewendeten Seite entgegen der Löserichtung des Stifts (6) hintereinander greifende Rastkanten (9, 14; 27, 28) aufweisen, die so angeordnet sind, daß sie bei zunehmender Bandspannung sicherer in Eingriff gehalten werden.

2. Vorrichtung nach Anspruch 1, dadurch gekennzeichnet, daß die stiftseitige(n) Kante(n) umlaufend ausgebildet ist (sind).

3. Vorrichtung nach Anspruch 1 oder 2, dadurch gekennzeichnet, daß das Schloß gegenstandsseitig durch seitlich der Durchgangsöffnung (2) verlaufende Rippen (22) verstärkt ist.

4. Vorrichtung nach Anspruch 3, dadurch gekennzeichnet, daß ein Bandende mit dem Schloß (1) einstückig verbunden ist und daß die Verstärkungsrippen (22) in ihrer Längsrichtung in das Band (3) übergehen.

5. Vorrichtung nach einem der Ansprüche 1 bis 4, dadurch gekennzeichnet, daß das Schloß (1) eine unmittelbar oder mittelbar an der Oberfläche des Gegenstands (10) anzuliegen bestimmte Fläche aufweist, die zu der Richtung der Durchgangsöffnung (2) einen Winkel von mehr als 90° einschließt.

**Claims**

1. Apparatus for binding an elongated object (10), for example a bunch of cables with a band (3) to be tensioned around the object and a lock (1) connecting the ends of the band, which comprises a through hole (2) for at least one end of the band (11) and a bore (4, 5) extending at right angles thereto, which contains a pin (6) to be driven through the band (3, 11) located in the through hole (2), in which case the pin (6) and the bore (4, 5) are provided with cooperating projections and recesses for securing the pin in its end position, characterised in that on their side facing the object (10) to be bound, the pin (6) and the bore (4, 5) comprise locking edges (9, 14; 27, 28) engaging one behind the other in the opposite direction to that in which the pin (6) is released, which edges are arranged so that as the tension of the band increases, they are kept more securely in engagement.

2. Apparatus according to Claim 1, characterised in that the edge or edges adjacent the pin is/are constructed to rotate.

3. Apparatus according to Claim 1 or 2, characterised in that adjacent the object the lock is re-inforced by ribs (22) extending laterally with respect to the through hole (2).

4. Apparatus according to Claim 3, characterised in that one end of the band is connected in one piece to the lock (1) and that the strengthening ribs (22) pass into the band (3) in their longitudinal direction.

5. Apparatus according to one of Claims 1 to 4, characterised in that the lock (1) comprises a surface intended to bear directly or indirectly on the surface of the object (10), which surface encloses an angle of more than 90° with respect to the direction of the through hole (2).

**Revendications**

1. Dispositif pour lier un objet de grande longueur (10), par exemple un faisceau de câbles, comprenant un ruban (3) à tendre autour dudit objet et une serrure (1) reliant les extrémités du ruban, serrure qui présente un orifice de passage (2) pour au moins une extrémité (11) du ruban et un perçage (4, 5) s'étendant transversalement par rapport à cet orifice, perçage qui contient une tige (6) devant être enfoncée dans le ruban (3, 11) se trouvant dans l'orifice de passage (2), la tige (6) et le perçage (4, 5) étant munis de parties en saillie et de parties en retrait qui coopèrent pour fixer la tige dans sa position finale, caractérisé par le fait que la tige (6) et le perçage (4, 5) présentent sur leur côté orienté vers l'objet à lier (10) des bords d'encliquetage (9, 14; 27, 28) qui engrènent les uns derrière les autres en sens inverse du sens de desserrement de la tige (6) et qui sont disposés de telle sorte que leur engagement mutuel devient de plus en plus sûr au fur et à mesure que la tension du ruban augmente.

2.- Dispositif selon la revendication 1, caractérisé par le fait que la réalisation du ou les bords placé(s) du côté de la tige est périphérique.

3.- Dispositif selon la revendication 1 ou 2, caractérisé par le fait que la serrure est renforcée du côté de l'objet par des nervures (22) s'étendant latéralement à l'orifice de passage (2).

4.- Dispositif selon la revendication 3, caractérisé par le fait qu'une extrémité du ruban est reliée à la serrure (1) de manière à ne former qu'une seule pièce et que, dans leur direction longitudinale, les nervures de renfort (22) s'aplatissent jusqu'au niveau du ruban (3).

5.- Dispositif selon l'une des revendications 1 à 4, caractérisé par le fait que la serrure (1) présente une surface destinée à s'appliquer directement ou indirectement sur la surface de l'objet (10), surface qui, en direction de l'orifice de passage (2), forme un angle intérieur supérieur à 90°.

Fig.1

Fig. 2

Fig.5

Fig. 6

Fig. 3

F i g.4